# NEUE EUROPÄISCHE PATENTSCHRIFT

(11) **EP 1 461 995 B2**
(45) Veröffentlichungstag und Bekanntmachung des Hinweises auf die Entscheidung über den Einspruch: **28.09.2016**
(45) Hinweis auf die Patenterteilung: 18.09.2013
(21) Anmeldenummer: 04101069.5
(22) Anmeldetag: 16.03.2004
(51) Int. Cl.: A01F 15/07

(54) **Vorrichtung zum Umhüllen eines Ballens mit einer Hüllbahn, Ballenpresse und Sensor**
DEVICE FOR WRAPPING A BALE WITH AN ENVELOPE, BALING PRESS AND SENSOR
DISPOSITIF D'EMBALLAGE D'UNE BALLE AVEC UNE ENVELOPPE, PRESSE A BALLES ET DETECTEUR

(30) Priorität: 22.03.2003 DE 10312897
(43) Veröffentlichungstag der Anmeldung: 29.09.2004
(73) Patentinhaber: Deere & Company, Moline, IL 61265 (US)
(72) Erfinder: Viaud, Jean, 70100 Gray (FR); Biziorek, Stéphane, 70600 Champlitte (FR)
(74) Vertreter: Holst, Sönke

(56) Entgegenhaltungen:
- EP-A- 1 310 155
- WO-A1-98/41450
- DE-A1- 4 442 479
- DE-A1- 10 011 158
- DE-A1- 19 535 478
- US-A- 3 987 902
- US-A- 4 813 288
- US-A- 4 855 924
- US-A- 4 972 494
- US-A- 5 126 872
- US-A- 5 129 207
- US-A- 5 388 504
- US-A- 5 433 059
- US-A- 5 551 218
- US-A- 5 568 716
- US-A- 5 687 548
- US-A- 5 692 365
- US-A- 5 722 214
- US-A- 5 964 391
- US-A1- 2001 047 640
- W. EIßLER, PROF. DR.-ING.: 'Praktischer Einsatz von berührungslos arbeitenden Sensoren Auswahlkriterien und Anwendungsbeispiele aus der Automatisierungs- und Steuerungstechnik', 1996, EXPERT VERLAG, RENNINGEN-MALMSHEIM Seiten 252 -257 - 450
- Wenglor: "Laser-Glanz-Sensor-Weltneuheit- eine glänzende Idee

## Beschreibung

Die Erfindung betrifft eine Ballenpresse mit einer Vorrichtung zum Umhüllen eines in einem von Walzen umgebenen Pressraum gebildeten Ballens mit einer Hüllbahn, mit Mitteln, welche die Hüllbahn dem Ballen in dem Pressraum zuführen, wobei die Hüllbahn durch einen eine Hüllbahnzufuhrstelle definierenden Spalt zwischen zwei benachbarten Walzen hindurch dem Pressraum zugeführt wird, wo sie von dem in Drehung versetzten Ballen mitgenommen wird.

Die DE-A1-100 11 158 zeigt eine Ballenpresse mit einer Vorrichtung zum Umhüllen eines Ballens mit einer Hüllbahn. Die Hüllbahn wird mittels einer Vortriebswalze von einer Vorratsrolle abgezogen. Die Vorrichtung weist einen Sensor auf, welcher ermittelt, ob sich die Hüllbahn um die Vortriebswalze wickelt und somit dem Ballen nicht ordnungsgemäß zugeführt wird. Wird durch den Sensor eine Fehlfunktion ermittelt, so wird der Umhüllungsvorgang abgebrochen.

Das der Erfindung zu Grunde liegende Problem wird darin gesehen, dass eine derartige Vorrichtung zum Umhüllen eines Ballens den Umhüllungsvorgang nur dann abbricht, wenn sich die Hüllbahn bereits um die Vortriebswalze gewickelt hat. Kommt es hingegen zu einem Aufstauen der Hüllbahn, wird keine Fehlfunktion ermittelt und es kann zu einem Verstopfen kommen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird eine Ballenpresse mit einer Vorrichtung zum Umhüllen eines Ballens zur Verfügung gestellt, welche ermittelt, ob auf einer Oberfläche des Ballens Hüllbahn vorhanden ist. Dies ist ein Indiz dafür, dass der Ballenumhüllungsvorgang ordnungsgemäß verläuft und sich die Hüllbahn nicht um Bauteile der Ballenpresse wickelt oder sich ungewollt aufstaut. Ermitteln die Sensoren, dass keine Hüllbahn vorhanden ist, obwohl der Umhüllungsvorgang nach Abschluss der Ballenbildung gestartet wurde, so kann die Umhüllung abgebrochen werden und es kommt nicht zu einem weiteren Aufstauen der Hüllbahn und auch nicht zu einem Verstopfen.

Bei den Mitteln, welche die Hüllbahn dem Ballen zuführen, kann es sich beispielsweise um ein Vortriebselement bzw. eine Vortriebswalze oder -rolle handeln, welche die Hüllbahn von einem Vorrat, beispielsweise in der Art einer Rolle, abzieht. Es ist aber auch die Verwendung eines Andrückelements möglich, welches die Hüllbahn zu Beginn des Einhüllvorgangs an den Ballen heranbringt bzw. andrückt, so dass es durch diesen mitgenommen werden kann und auf diese Weise von dem Vorrat abgezogen wird. Darüber hinaus bzw. daneben können die Mittel auch eine Leiteinrichtung oder andere bzw. weitere Transport-oder Förderelemente aufweisen.

Einer der Sensoren ist stromabwärts der Hüllbahnzufuhrstelle vorgesehen, so dass bereits kurz nach dem Beginn des Umhüllungsvorgangs festgestellt werden kann, ob der Umhüllungsvorgang ordnungsgemäß verläuft und der Ballen durch die Hüllbahn eingehüllt wird. Unter stromabwärts der Hüllbahnzufuhrstelle wird verstanden, dass der Sensor kurz nach dem Punkt, an dem die Hüllbahn an den Ballen herangelangt, angeordnet ist.

Der andere Sensor ist stromaufwärts der Hüllbahnzufuhrstelle vorgesehen, wobei der Begriff "stromaufwärts" derart zu verstehen ist, dass der Sensor bezogen auf die Rotationsrichtung des Ballens kurz vor der Stelle der Hüllbahnzufuhr angeordnet ist. Dadurch, dass der Sensor hier vorgesehen ist, kann er ermitteln, ob sich eine erste Lage von Hüllbahn um den Ballen gelegt hat. Ist dies der Fall, so besteht nur noch eine geringe Gefahr, dass es während einer weiteren Umhüllung des Ballens zu einem Fehlleiten oder Verknäulen etc. der Hüllbahn kommt.

Dadurch, dass sowohl stromabwärts als auch stromaufwärts der Hüllbahnzufuhrstelle ein Sensor vorgesehen ist, können die o.g.

Vorteile kombiniert werden und sowohl festgestellt werden, ob der Umhüllungsvorgang ordnungsgemäß begonnen hat, als auch, ob eine erste Lage von Umhüllungsmaterial auf dem Ballen aufgebracht wurde.

In Abhängigkeit von durch den/die Sensor(en) gelieferten Sensorsignal(en) kann die Zufuhr von Hüllbahn zu dem Ballen derart gesteuert werden, dass für den Fall, dass ermittelt wurde, dass der Umhüllungsvorgang nicht ordnungsgemäß durchgeführt wird, die Zufuhr von Hüllbahn unterbrochen wird. Hierzu kann vorgesehen sein, dass die Mittel keine Hüllbahn mehr zuführen und/oder dass der Ballen nicht länger rotiert und somit keine Hüllbahn von dem Vorrat abzieht, welche zwar ergriffen wurde, sich aber nicht ordnungsgemäß auf seine Oberfläche legt.

Durch das Sensorsignal kann beispielsweise eine Anzeige oder eine optische und/oder akustische Warnanzeige aktiviert werden, die einer Bedienungsperson eine Fehlfunktion der Umhüllungsfunktion anzeigt, so dass diese die Umhüllung unterbrechen kann. Die Sensoren können aber auch mit einer vorzugsweise elektrischen oder elektronischen Steuer- bzw. Regeleinrichtung zusammenwirken. Derartige Steuer- bzw. Regeleinrichtungen sind an Ballenpressen oder an Fahrzeugen, durch welche Ballenpressen gezogen werden, häufig bereits vorgesehen, um weitere Funktionen der Ballenpresse zu steuern bzw. zu regeln. Durch die Steuer- bzw. Regeleinrichtung können die Sensorsignale aufgenommen und verarbeitet werden, so dass der Umhüllungsvorgang bei einer Fehlfunktion automatisch abgebrochen werden kann. Die Steuer- bzw. Regeleinrichtung ermöglicht auch ein Einbeziehen einer zeitlichen Komponente, beispielsweise in der Art, dass die Sensorsignale nach vorgegebenen Zeitdauern nach dem Start des Umhüllungsvorgangs ermittelt werden. Die Zeitdauern sind derart zu wählen, dass bei einer ordnungsgemäßen Funktion damit zu rechnen ist, dass auf den Ballen an der betrachteten Stelle Hüllbahn aufgebracht ist.

Hierbei kann auch die Rotationsgeschwindigkeit des Ballens bzw. dessen Drehzahl in Betracht gezogen werden.

Die Sensoren können Sensoren jeder geeigneten Art sein. Bei der Verwendung von zwei oder mehr Sensoren ist auch eine Kombination unterschiedlicher Sensorarten möglich. Beispielsweise können mechanische Sensoren, Ultraschall-, Infrarot-, Näherungssensoren etc. verwendet werden. Insbesondere eine Verwendung von optischen Sensoren, insbesondere Farb- oder Kontrastsensoren, bietet zusätzlich den Vorteil, dass in Verbindung mit Markierungen oder Farbunterschieden etc., welche an oder auf der Hüllbahn vorgesehen sind, die tatsächliche Drehgeschwindigkeit des Ballens ermittelt werden kann. Diese kann beispielsweise mit der theoretischen Drehgeschwindigkeit, welche beispielsweise durch die Drehzahl der Zapfwelle eines antreibenden Fahrzeugs bestimmt wird, verglichen werden, wodurch Rückschlüsse auf den Schlupf des Ballens möglich werden. Dies wiederum ermöglicht ein Anpassen der Hüllbahnzufuhr oder der Dauer des Hüllvorgangs etc..

Die Sensoren sind bei einer üblichen Ballenpresse auf eine Umfangsfläche des Ballens gerichtet. Es ist aber auch denkbar, Sensoren vorzusehen, welche ermitteln, ob bei entsprechend ausgestalteten Ballenpressen auch die Seitenflächen des Ballens mit Hüllbahn bedeckt sind. Weiter können Sensoren vorgesehen sein, welche auf Kantenbereiche des Ballens gerichtet sind und beispielsweise ermitteln, ob sich eine entsprechend ausgebildete Hüllbahn über die Kanten des Ballens legt.

Eine Vorrichtung zum Umhüllen eines Ballens kann in der Industrie an Ballenpressen Verwendung finden, welche Ballen aus Papier, Abfällen, textilen Materialien etc. bilden. Besonders geeignet ist eine solche Vorrichtung aber zur Verwendung an einer landwirtschaftlichen Ballenpresse für Ballen aus landwirtschaftlichen Erntegütern, da diese üblicherweise an ein Zugfahrzeug angehängt sind und durch eine Bedienungsperson dieses Zugfahrzeugs überwacht werden müssen. Fehlfunktionen einer Umhüllungseinrichtung sind für diese Bedienungspersonen schwer festzustellen und werden häufig erst bei Auswurf des Ballens bemerkt.

Die Sensoren für eine Steuer- bzw. Regeleinrichtung einer Vorrichtung zum Umhüllen eines Ballens können an einer solchen Vorrichtung auch nachgerüstet oder als Ersatzteil zur Verfügung gestellt werden. Dies ist einfacher Art und Weise möglich, da die Sensoren ermitteln, ob auf einer Oberfläche des Ballens Hüllbahn vorhanden ist. Es ist also nicht notwendig, den Ballen an bestimmten Bauteilen der Vorrichtung vorzusehen oder Bauteile derart zu verändern, dass sie mit den Sensoren zusammenwirken oder zu deren Aufnahme etc. geeignet sind.

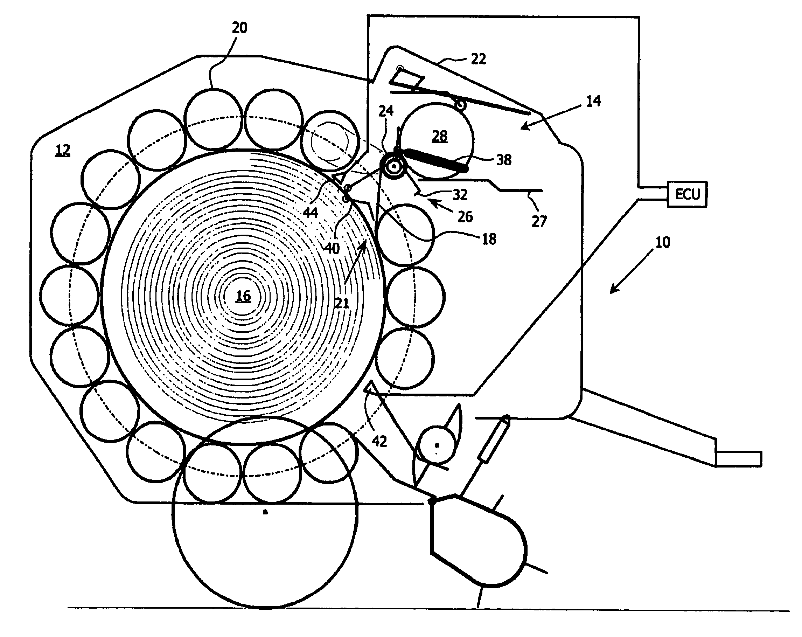

In der Zeichnung ist ein nachfolgend näher beschriebenes Ausführungsbeispiel der Erfindung dargestellt

Die einzige Figur zeigt eine Ballenpresse 10 von im Wesentlichen herkömmlicher Bauart mit einem Pressraum 12. Entsprechend den vorliegenden Ausführungsbeispielen ist darüber hinaus eine Vorrichtung 14 zum Umwickeln eines in dem Pressraum 12 gebildeten Ballens 16 mit einer Hüllbahn 18 vorgesehen.

Bei der Ballenpresse 10 handelt es sich um eine bekannte Bauart, d.h. mit einem Pressraum 12 konstanter Größe, welcher ausschließlich von Walzen 20 umgeben wird.

Eine derartige Ballenpresse 10 kann in der Landwirtschaft zum Bilden von Ballen 16 aus Erntegut, wie z.B. Stroh, Heu oder Gras eingesetzt werden. Es ist aber auch eine Verwendung in industriellen Bereichen denkbar.

Die Vorrichtung 14 ist in der vorliegenden Ausführungsform an der Vorderseite der Ballenpresse 10 vorgesehen. Die Hüllbahn 18 wird durch einen Spalt zwischen zwei benachbarten Walzen 20, welcher zukünftig als Hüllbahnzufuhrstelle 21 bezeichnet wird, hindurch dem Pressraum 12, zugeführt, wo sie von dem in Drehung versetzten Ballen 16 mitgenommen wird. Die Vorrichtung 14 kann in einem mittleren Bereich der Ballenpresse 10 oder auch vor oder oberhalb des Pressraums 12 angeordnet sein.

Mittels der Hüllbahn 18 wird der Ballen 16 gebunden und somit daran gehindert, nach einem Verlassen der Ballenpresse 10 auseinander zu fallen. Bei der Hüllbahn 18 kann es sich um Folie, Netz, Gewebe, Papier oder dergleichen handeln.

Die Vorrichtung 14 weist ein Gehäuse 22, Mittel 24, welche die Hüllbahn 18 dem Ballen 16 zuführen bzw. ein beispielsweise als Vortriebswalze ausgebildetes Vortriebselement und eine Trenneinrichtung 26 auf. Das Gehäuse 22 enthält einen Fachboden 27, auf welchem die Hüllbahn 18 als Rolle 28 bzw. Vorrat gelagert wird. Der Fachboden 27 kann auch derart ausgebildet sein, dass er mehrere Rollen 28 bevorratet und/oder Stufen oder Mulden zu deren Lagesicherung aufweist.

Das Vortriebselement bzw. die Mittel 24 sind auf seiner Umfangsfläche mit einem Belag hohen Reibwerts versehen und können in Drehung versetzt werden. Die Drehung hilft anfänglich, die Hüllbahn 18 von der Rolle 28 abzuziehen und während des Umhüllungsvorgangs infolge einer gebremsten Drehbewegung in ihr eine Spannung aufzubauen. Die Rolle 28 befindet sich oberhalb der Auflageebene des Fachbodens 27 und kommt in ihrer Betriebsstellung mit einem Bereich, der etwa einer 6 bis 9 Uhr Stellung entspricht, an den Mitteln 24 zur Anlage. Durch die Mittel 24 wird die Hüllbahn 18 von der Rolle 28 abgezogen und durch den Spalt zwischen den benachbarten Walzen 20 in den Pressraum 12 geführt. Bei einem ordnungsgemäßen Betrieb wird die Hüllbahn 18 von dem rotierenden Ballen 16 erfasst und hüllt diesen ein.

Die Trenneinrichtung 26 weist ein Messer 32 auf, welches schwenkbar befestigt ist, um in den Weg der Hüllbahn 18 einzutreten und diese zu durchtrennen bzw. ein Abreißen zu bewirken, wenn der Einhüllvorgang abgeschlossen ist. Ein Verschwenken des Messers 32 erfolgt über einen Hydraulikmotor 38, welcher mittels einer bekannten beispielsweise elektrischen oder elektronischen Steuer- bzw. Regeleinrichtung ECU betätigt wird.

Im vorliegenden Ausführungsbeispiels ist darüber hinaus eine Leiteinrichtung 40 schwenkbar vorgesehen, die die Hüllbahn 18 an den Ballen 16 heranführt. Eine derartige Leiteinrichtung 40 kann der deutschen Patentanmeldung mit dem Aktenzeichen 102 26 797.9 vom 15.06.2002 entnommen werden, deren Offenbarung hiermit in die vorliegende Anmeldung einbezogen wird.

Darüber hinaus sind in dem Pressraum 12 zwei Sensoren 42, 44 in Bereichen innerhalb der Rollen 20 an den Ballen 16 angrenzend vorgesehen. Der erste Sensor 42 ist stromabwärts der Stelle der Hüllbahnzufuhr 21, beispielsweise im Bereich der Gutzufuhr vorgesehen. Der zweite Sensor 44 ist stromaufwärts der Hüllbahnzufuhrstelle 21 bzw. in einem hinter Hüllbahnzufuhr liegenden Bereich angeordnet.

Die Sensoren ermitteln jeweils, ob der Ballen 16 an der jeweiligen Stelle mit Hüllbahn 18 umhüllt ist oder ob, beispielsweise in Folge einer Fehlfunktion oder eines Mangels an Hüllbahn 18 auf dem Vorrat 28 keine Umhüllung des Ballens 16 mit Hüllbahn 18 erfolgt.

Beide Sensoren stehen mit der Steuer- bzw. Regeleinrichtung ECU in der Art in Verbindung, dass sie Sensorsignale übermitteln, welche durch diese verarbeitet werden können, und aufgrund derer der Vorgang des Umhüllens des Ballens 16 mit Hüllbahn 18 gesteuert bzw. geregelt werden kann.

Bei den Sensoren kann es sich beispielsweise um optische Sensoren, mechanisch Sensoren, Abstandssensoren, wie Ultraschallsensoren oder Näherungssensoren, Lichtschranken, Infrarotsensoren oder jede andere geeignete Sensorart handeln. Auch eine Kombination unterschiedlicher Sensortypen ist möglich.

Besonders geeignet sind optische Sensoren, welche auf Farb- oder Kontrastveränderungen oder -unterschiede ansprechen. Derartige Sensoren ermöglichen bei einer entsprechenden Ausgestaltung der Hüllbahn 18 darüber hinaus eine Bestimmung der Länge der abgewickelten Hüllbahn, beispielsweise indem auf der Hüllbahn in vorbestimmten Abständen Farbwechsel, Markierungen o.ä. vorgesehen sind. Hierüber sind auch Rückschlüsse auf die tatsächliche Rotationsgeschwindigkeit des Ballens möglich, indem parallel eine Zeiterfassung bzw. - messung erfolgt.

Im Folgenden soll auf die Funktionsweise der Vorrichtung genauer eingegangen werden.

Ist die Bildung des Ballens 16 in dem Pressraum 12 abgeschlossen, was in bekannter Art und Weise durch einen nicht dargestellten Sensor, welcher beispielsweise mechanisch oder optisch die Dicke des Ballens 16 bestimmt, ermittelt wird, wird die Vorrichtung 14 aktiviert. Dies geschieht, indem der Hydraulikmotor 38 von der Steuer- bzw. Regeleinrichtung ECU angesteuert in seine in der Figur dargestellte, eingefahrene Stellung gebracht wird.

In dieser Stellung werden die Mittel 24 in Rotation versetzt. Die Mittel 24 ziehen nun Hüllbahn 18 von dem Vorrat 28 ab. Die Hüllbahn 18 gelangt zwischen den Rollen 20 an den Ballen 16 heran, wobei sie hierbei durch die Leiteinrichtung 40 unterstützt wird.

Bei einer ordnungsgemäßen Funktion der Vorrichtung 14 wird die Hüllbahn 18 durch den Ballen 16 erfasst und mitgenommen, wodurch sich der Ballen 16 selbsttätig durch seine Rotation mit Hüllbahn 18 umhüllt.

Der erste Sensor 42 stromabwärts der Hüllbahnzufuhr nimmt nun, beispielsweise optisch, mechanisch oder in anderer Art und Weise, auf, ob auf dem Ballen 16 Hüllbahn 18 vorhanden ist und der Umhüllungsvorgang somit ordnungsgemäß begonnen hat. Wird durch den Sensor 42 erkannt, dass keine Hüllbahn 18 auf dem Ballen 16 vorhanden ist, so liefert der Sensor 42 ein entsprechendes Signal an die Steuer- bzw. Regeleinrichtung ECU. Diese kann nun den Umhüllungsvorgang abbrechen und beispielsweise bewirken, dass der Ballen 16 nicht länger rotiert oder durch die Mittel 24 keine weitere Hüllbahn 18 von dem Vorrat 28 abgezogen wird. Darüber hinaus kann vorgesehen sein, dass eine Bedienungsperson, beispielsweise mittels einer Anzeige oder eines anderen optischen oder auch akustischen Signals auf die Fehlfunktion hingewiesen wird, um dieser Abhelfen zu können.

Liefert der Sensor 42 ein Signal, das anzeigt, dass der Ballenumhüllungsvorgang ordnungsgemäß begonnen hat, so wird der Vorgang fortgesetzt. Im Folgenden bestimmt nun der zweite Sensor 44, ob der Ballen 16 vollständig mit einer ersten Lage von Hüllbahn 18 umhüllt wurde. Trifft dies zu, so wird der Ballenumhüllungsvorgang fortgesetzt Das Ende des Vorgangs wird dann in üblicher Art und Weise, beispielsweise nach einer vorgegebenen Zeitdauer oder durch ein Bestimmen einer vorgegebenen Hüllbahnlänge bestimmt Hierbei kann vorgesehen sein, dass die Hüllbahnlänge ebenfalls durch einen der Sensoren 42, 44, wie dies zuvor beschrieben wurde, ermittelt wird oder auch, dass ein weiterer Sensor etc. vorgesehen ist, der beispielsweise die Umdrehungszahl des Ballens oder des Vorrats aufnimmt.

Wird durch den zweiten Sensor 44 festgestellt, dass auf dem Ballen 16 keine Hüllbahn 18 vorhanden ist, so wird ein entsprechendes Signal an die Steuer-bzw. Regeleinrichtung ECU übermittelt, die gemäß eines entsprechenden Signals des ersten Sensors 42 verfährt.

Nach einem ordnungsgemäßen Abschluss des Umhüllungsvorgangs wird die Hüllbahn durch die Trenneinrichtung 26 durchtrennt und der umhüllte Ballen 16 kann aus dem Pressraum 12 der Ballenpresse 10 in üblicher Art und Weise ausgestoßen werden.

## Patentansprüche

1. Ballenpresse (10) mit einer Vorrichtung (14) zum Umhüllen eines in einem von Walzen (20) umgebenen Pressraum (12) gebildeten Ballens (16) mit einer Hüllbahn (18), mit Mitteln (24), welche die Hüllbahn (18) dem Ballen (16) in dem Pressraum (12) zuführen, wobei die Hüllbahn (18) durch einen eine Hüllbahnzufuhrstelle (21) definierenden Spalt zwischen zwei benachbarten Walzen (20) hindurch dem Pressraum (12) zugeführt wird, wo sie von dem in Drehung versetzten Ballen (16) mitgenommen wird, **gekennzeichnet durch** wenigstens zwei Sensoren (42, 44), welche ermitteln, ob auf einer Oberfläche des Ballens (16) Hüllbahn (18) vorhanden ist, wobei in dem Pressraum (12) die zwei Sensoren (42, 44) in Bereichen innerhalb der den Pressraum umgebenden Walzen (20) an den Ballen (16) angrenzend vorgesehen sind, wobei einer der Sensoren (42, 44) stromabwärts und der zweite Sensor (44) stromaufwärts der Hüllbahnzufuhrstelle (21) angeordnet ist.

2. Ballenpresse (10) nach Anspruch 1, **dadurch gekennzeichnet, dass** die Mittel (24) wenigstens ein Vortriebselement, welches die Hüllbahn (18) von einem Vorrat, beispielsweise in der Art einer Rolle (28) abzieht, oder ein Andrückelement aufweisen, welches die Hüllbahn (18) an den Ballen (16) heranbringen kann, so dass die Hüllbahn (18) von dem Ballen (16) erfasst und somit von dem Vorrat abgezogen wird.

3. Ballenpresse (10) nach einem oder mehreren der vorherigen Ansprüche, **dadurch gekennzeichnet, dass** eine Zufuhr von Hüllbahn (18) und/oder eine Rotation des Ballens (16) in Abhängigkeit von einem Sensorsignal der Sensoren (42, 44) gesteuert wird.

4. Ballenpresse (10) nach einem oder mehreren der vorherigen Ansprüche, **dadurch gekennzeichnet, dass** die Sensoren (42, 44) mit einer Steuer- bzw. Regeleinrichtung (ECU) zusammenwirken.

5. Ballenpresse (10) nach einem oder mehreren der vorherigen Ansprüche, **dadurch gekennzeichnet, dass** es sich bei den Sensoren (42, 44) um einen optischen Sensor, einen Ultraschallsensor, einen Näherungssensor, einen Infrarotsensor oder einen mechanischen Sensor oder eine Kombination davon handelt.

6. Ballenpresse (10) nach einem oder mehreren der vorherigen Ansprüche, **dadurch gekennzeichnet, dass** es sich bei der Oberfläche zumindest um eine Umfangsfläche des Ballens (16) handelt.

## Claims

1. Baler (10) with a device (14) for wrapping a bale (16) formed in a baling chamber (12), which is surrounded by rollers (20), with a wrapping web (18), with means (24) which feed the wrapping web (18) to the bale (16) in the baling chamber (12), wherein the wrapping web (18) is fed through a gap defining a wrapping-web-feeding point (21) between two adjacent rollers (20) to the baling chamber (12) where said wrapping web is entrained by the bale (16) which has been set into rotation, **characterized by** at least two sensors (42, 44) which determine whether wrapping web (18) is present on a surface of the bale (16), wherein, in the baling chamber (12), the two sensors (42,44) are provided adjacent to the bale (16) in regions within the roller (20) surrounding the baling chamber, wherein one of the sensors (42, 44) is arranged downstream of the wrapping-web-feeding point (21) and the second sensor (44) is arranged upstream of said wrapping-web-feeding point (21).

2. Baler (10) according to Claim 1, **characterized in that** the means (24) have at least one advancing element which pulls the wrapping web (18) off from a stock, for example in the manner of a roll (28), or has a press-on element which can bring the wrapping web (18) up to the bale (16) such that the wrapping web (18) is grasped by the bale (16) and is therefore pulled off from the stock.

3. Baler (10) according to one or more of the preceding claims, **characterized in that** a feed of wrapping web (18) and/or a rotation of the bale (16) are/is controlled depending on a sensor signal of the sensors (42, 44).

4. Baler (10) according to one or more of the preceding claims, **characterized in that** the sensors (42, 44) interact with a control and regulating device (ECU).

5. Baler (10) according to one or more of the preceding claims, **characterized in that** the sensors (42, 44) are an optical sensor, an ultrasonic sensor, a proximity sensor, an infrared sensor or a mechanical sensor, or a combination thereof.

6. Baler (10) according to one or more of the preceding claims, **characterized in that** the surface is at least one circumferential surface of the bale (16).

## Revendications

1. Presse à balles (10) comprenant un dispositif (14) d'emballage d'une balle (16) formée dans un espace de pressage (12) entouré par des rouleaux (20), comprenant une bande d'enveloppement (18), des moyens (24) qui acheminent la bande d'enveloppement (18) à la balle (16) dans l'espace de pressage (12), la bande d'enveloppement (18) étant acheminée à l'espace de pressage (12) à travers une fente entre deux rouleaux adjacents (20), définissant un point d'alimentation de bande d'enveloppement (21), où elle est entraînée par la balle (16) mise en rotation, **caractérisée par** au moins deux capteurs (42, 44) qui détectent si une bande d'enveloppement (18) est présente sur une surface de la balle (16), les deux capteurs (42, 44) dans l'espace de pressage (12) étant prévus dans des régions à l'intérieur des rouleaux (20) entourant l'espace de pressage en position adjacente aux balles (16), l'un des capteurs (42, 44) étant disposé en aval et le deuxième capteur (44) étant disposé en amont du point d'alimentation de la bande d'enveloppement (21).

2. Presse à balles (10) selon la revendication 1, **caractérisée en ce que** les moyens (24) présentent au moins un élément d'avance qui tire la bande d'enveloppement (18) depuis une réserve, par exemple sous forme de rouleau (28), ou un élément de pressage, qui peut amener la bande d'enveloppement (18) contre la balle (16), de telle sorte que la bande d'enveloppement (18) soit saisie par la balle (16) et soit ainsi tirée depuis la réserve.

3. Presse à balles (10) selon l'une quelconque ou plusieurs des revendications précédentes, **caractérisée en ce qu'**une alimentation de la bande d'enveloppement (18) et/ou une rotation de la balle (16) sont commandées en fonction d'un signal de capteur des capteurs (42, 44).

4. Presse à balles (10) selon l'une quelconque ou plusieurs des revendications précédentes, **caractérisée en ce que** les capteurs (42, 44) coopèrent avec un dispositif de commande ou de régulation (ECU).

5. Presse à balles (10) selon l'une quelconque ou plusieurs des revendications précédentes, **caractérisée en ce que** les capteurs (42, 44) sont un capteur optique, un capteur à ultrasons, un capteur de proximité, un capteur infrarouge ou un capteur mécanique ou une combinaison de ceux-ci.

6. Presse à balles (10) selon l'une quelconque ou plusieurs des revendications précédentes, **caractérisée en ce que** la surface est au moins une surface périphérique de la balle (16).
